# EUROPEAN PATENT APPLICATION

(11) **EP 3 797 961 A1**
(43) Date of publication of application: **31.03.2021**
(21) Application number: 19210100.4
(22) Date of filing: 19.11.2019
(51) Int. Cl.: B29C 44/36, B29C 44/50, C08G 18/76, C08G 18/40, E04B 1/76, C08G 101/00

(54) **METHOD FOR PRODUCING POLYURETHANE FOAM**

(30) Priority: 25.09.2019 JP 2019173945
(71) Applicant: Covestro Intellectual Property GmbH & Co. KG, 51373 Leverkusen (DE)
(72) Inventor: Kei, Odani, 679-5161 Tatsuno-city, Hyogo prefecture (JP); Takayasu, Tanabe, 5400-0004 Osaka-shi Osaka-fu (JP); Hideki, Wada, 666-0026 Kawanishi-shi Hyogo-ken (JP)
(74) Representative: Levpat

(57) **Abstract**

[Problem] It is an object of the present invention to provide a method for producing a polyurethane foam in which the same polyurethane foam stock solution can be used throughout the year without adjusting reactivity by, for example, changing the amount of a catalyst.

[Solution] The present invention is a method for producing a polyurethane foam, wherein the method comprises a step of spraying a polyurethane foam stock solution comprising a polyisocyanate component and a polyol component in a mist form by using compressed gas, in which the compressed gas in the step is heated and kept at a temperature of not less than 40°C.

## Description

### Technical Field

The present invention relates to a method for producing a polyurethane foam. In particular, the present invention relates to a method for producing a polyurethane foam in which the same polyurethane foam stock solution can be used throughout the year without adjusting reactivity by, for example, changing the amount of a catalyst.

### Background Art

Among resin foams, a polyurethane foam (also referred to as a "urethane foam") has an excellent heat insulation performance, and is widely used as a foam thermal insulator. A polyurethane foam is generally produced by admixing a polyol and a polyisocyanate together with, for example, a catalyst, a foaming agent, and a foam stabilizer, which are added if necessary, and foaming the resulting mixture.

Examples of the foaming method which is generally used include hand-mixing foaming, simplified foaming, an injection method, a froth injection method, and a spray method. For example, a spray method is widely used in on-site foaming in which foaming is performed at a site where heat insulation is required using a stock solution and a foaming machine which are brought into an area where the foaming is performed.

For example, JP 2018-70707 A (Patent Document 1) discloses a method for producing a rigid polyurethane foam which comprises admixing a liquid A containing a polyisocyanate compound, a liquid B containing a polyol compound, a foaming agent, and an amine catalyst, and a liquid C containing an organometallic catalyst which has a foaming-promoting activity, and foaming the resulting mixture on-site , the method having a step of admixing the liquid B and the liquid C, and thereafter admixing the liquid A with the resulting mixture. Further the document discloses that a method for producing a rigid polyurethane foam which is easily adaptable to change in atmospheric temperature and can safely produce a foamed material having an excellent-quality stability can be provided.

### Citation List

### Patent Document

Patent Document 1: JP 2018-70707 A

### Summary of Invention

### Technical Problem

In a spray method, a polyurethane foam stock solution is ejected from a foaming machine (generally equipped with a spray gun) in a mist form. Thus, when on-site foaming is performed at a low temperature, for example in winter, the stock solution is cooled by ambient air before arriving at a target structure, resulting in low reactivity and dripping. Accordingly, for example, in a type A-3 spray-applied rigid urethane foam according to JIS A9526, cell size of the foam is rough, which results in a high thermal conductivity, and heat insulation performance is tend to be decreased. For example, when respraying is performed to form a bilayer, cell size of foam in the second layer also becomes rough, which results in a high thermal conductivity. Thus, it is thought that the polyurethane foam stock solution is not cooled by absorption of heat by a target structure, but cooled by ambient air. In particular, when thinner foam (e.g., foam having a thickness of 60 mm or less) is formed by spraying in a smaller amount, thermal conductivity becomes larger, resulting in remarkably degraded heat insulation performance. In a type A-1H spray-applied rigid urethane foam according to JIS A9526, temperature of a stock solution is low when arriving at a target structure, resulting in insufficient heat of reaction and deteriorated adhesion.

As a means for solving the above-described problems, a conceivable means includes increasing the temperature of a polyurethane foam stock solution used. In this means, since viscosity of the stock solution is decreased, the particle size of mist blown out by spraying becomes smaller and the stock solution spreads too broad, resulting in difficulty of foam application. Further, when mist becomes smaller, influence of ambient air becomes stronger. Thus, the stock solution is further cooled, resulting in further reduced reactivity. It is also thought that, in order to control viscosity during spraying so that mist does not become too small, the stock solution is formulated so that the initial viscosity is high. In this case, under circumstances in seasons except for winter, that is, in spring, summer, and autumn, viscosity becomes excessively high, and thus spray pattern does not spread properly. Further, in on-site foaming in a building, the distance between a stock-solution supply pump and a spray gun is generally tens of meters. Thus, when viscosity of a stock solution is high, resistance in a liquid supply hose becomes high and discharge pressure is decreased, resulting in difficulty of foam application.

As described in Patent Document 1, a measure for improving reactivity under a low-temperature environment by using, for example, a particular catalyst has been studied, for example. However, there is yet a room for improvement in establishment of a method for producing a polyurethane foam by which foam application is made possible without difficulty throughout the year in on-site foaming by spraying.

Recently, most suppliers of the stock solution prepare several types of stock solutions each having controlled reactivity for each season, and supply a suitable stock solution through the year. However, there are wide differences in atmospheric temperature not only among seasons but also among regions. Thus, it is desirable that a polyurethane foam stock solution is formulated independent of atmospheric temperature. When a stable application becomes possible by using a polyurethane foam stock solution having a fixed formulation independent of change in temperature, imparting stable heat insulation performance and adhesion to a target structure becomes possible, and inventory management of a stock solution becomes easy. Moreover, this further contributes significantly to improvements in various aspects.

Accordingly, an object of the present invention is to solve the above-described problems of prior art, and to provide a method for producing a polyurethane foam in which the same polyurethane foam stock solution can be used throughout the year without adjusting reactivity by, for example, changing the amount of a catalyst.

### Solution to Problem

In a foaming machine which is generally used for foaming by a spray method, compressed air is ejected from the tip of a spray gun together with a stock solution during spraying a polyurethane foam stock solution for the purpose of preventing clogging of the spray gun and maintaining a favorable spray pattern.

The present inventors have focused on compressed air and made extensive studies to achieve the above-described object, and have found that a polyurethane foam having a desired heat insulation performance and adhesion can be consistently produced by a spray method even performed under a low-temperature environment by ejecting compressed air heated and kept at a temperature of not less than 40°C together with a polyurethane foam stock solution, whereby reducing the extent of decrease in temperature of the stock solution at a foaming machine until the stock solution arrives at a target structure, and thus accomplished the present invention.

That is, a method for producing a polyurethane foam according to the present invention comprises a step of spraying a polyurethane foam stock solution comprising a polyisocyanate component and a polyol component in a mist form by using compressed gas, in which the compressed gas in the step is heated and kept at a temperature of not less than 40°C.

In a preferred embodiment of the method for producing a polyurethane foam according to the present invention, an ambient temperature at which the step is performed is not more than 15°C.

In another preferred embodiment of the method for producing a polyurethane foam according to the present invention, the temperature of the polyurethane foam stock solution is 30 to 60°C.

### Advantageous Effect of Invention

According to the present invention, a method for producing a polyurethane foam in which the same polyurethane foam stock solution can be used throughout the year without adjusting reactivity by, for example, changing the amount of a catalyst can be provided.

### Description of Embodiments

A method for producing a polyurethane foam according to the present invention is described below in detail. The method for producing a polyurethane foam according to the present invention comprises a step of spraying a polyurethane foam stock solution comprising a polyisocyanate component and a polyol component in a mist form by using compressed gas. As used herein, the step is also referred to as a spraying step.

In a spraying step of the method for producing a polyurethane foam according to the present invention, compressed gas is heated and kept at a temperature of not less than 40°C. The spraying step is a step of mixing a polyurethane foam stock solution comprising a polyisocyanate component and a polyol component using a foaming machine, and spraying the mixed stock solution on a target object together with compressed gas. In the spraying step according to the present invention, by heating and keeping the compressed gas at a temperature of not less than 40°C, the extent of decrease in temperature of the stock solution ejected from the foaming machine until the stock solution arrives at a target object for spraying can be reduced. Thus, even when the spraying is performed under a low-temperature environment, a desired polyurethane foam can be consistently produced. The temperature of compressed gas used in the spraying step is preferably not less than 50°C. The upper limit of the temperature of compressed gas is normally preferably, but not limited to, 80°C or 70°C, from the standpoint of, for example, durability of a hose.

Since the method for producing a polyurethane foam according to the present invention is preferred when spraying is performed under a low-temperature environment, effects of the present invention can be exerted more remarkably when the spraying step is performed under a lower-temperature environment such as at not more than 15°C, and more preferably at not more than 10°C. As used herein, the ambient temperature is a temperature of an environment at which the spraying step is performed, and is also referred to as an atmospheric temperature or the like. Generally, the ambient temperature is an outside-air temperature when the spraying step is performed outdoors, and when the spraying is performed in a room, the ambient temperature is a temperature in the room.

In the method for producing a polyurethane foam according to the present invention, since the extent of decrease in reactivity of a polyurethane foam stock solution can be reduced by regulating the temperature of compressed gas, formulation of the polyurethane foam stock solution is not particularly limited. For example, each of polyurethane foam stock solution having "a formulation for spring and autumn", "a formulation for summer", and "a formulation for from spring to autumn" can be used without problem even when spraying is performed under a low-temperature environment. Thus, the method for producing a polyurethane foam according to the present invention can be performed without problem when the temperature of the polyurethane foam stock solution used in the spraying step is a temperature even within a range suitable for normal use of a polyurethane foam stock solution used in a spray method, for example, a temperature within a range of 30 to 60°C, and more specifically a temperature within a range of 35 to 55°C. As used herein, the temperature of a polyurethane foam stock solution refers to a temperature of a mixture obtained by mixing a polyol component and a polyisocyanate component. The same applies to a temperatures of a polyol component and a polyisocyanate component before mixing.

In the method for producing a polyurethane foam according to the present invention, from the standpoint of mixing, the polyisocyanate component and the polyol component preferably have about the same viscosity. Specifically, the polyisocyanate component and the polyol component each have a viscosity at 20°C of preferably 80 to 1500 mPa·s, and more preferably 80 to 600 mPa·s. Herein, measurement of viscosity is performed according to a viscosity test method JIS K 7117-1 described in JIS A 9526:2015, and using a Brookfield rotational viscometer (B-type viscometer).

In the method for producing a polyurethane foam according to the present invention, a volume ratio between a polyisocyanate component (A) and a polyol component (B) (A : B) when mixing the components A and B is, from the standpoint of easy liquid-supply management, preferably 1 : 1, but is not particularly limited as long as mixing of the polyisocyanate component and the polyol component is not compromised.

In a spraying step of the method for producing a polyurethane foam according to the present invention, discharge pressure of a polyurethane foam stock solution is generally 5 to 8 MPa, and discharge rate of the polyurethane foam stock solution is generally 1000 to 7000 g/min. In the spraying step, pressure of compressed gas is generally 0.6 to 1.2 MPa.

In the method for producing a polyurethane foam according to the present invention, compressed gas is not particularly limited. In general, examples of the compressed gas used include compressed air. In the method for producing a polyurethane foam according to the present invention, the compressed gas is a gas used for the purpose of ejecting a polyurethane foam stock solution from a foaming machine in a mist form, and the compressed gas is ejected from a foaming machine (in particular, a spray gun) together with a polyurethane foam stock solution when the stock solution is discharged from the foaming machine (in particular, the spray gun). By using compressed gas, it becomes possible to prevent clogging of a spray gun and maintain spray pattern. The compressed gas is normally supplied from a compressor to a spray gun through a flow path such as an air supply hose.

In the method for producing a polyurethane foam according to the present invention, the polyurethane foam stock solution comprises a polyisocyanate component and a polyol component. Herein, the polyol component contains a polyol, and normally contains a foaming agent, a foam stabilizer, a flame retardant, a catalyst, or the like. The polyisocyanate component contains a polyisocyanate, and optionally contains an additive such as a foaming agent or a flame retardant.

It is known that types of polyurethane foam stock solutions are classified by specific combinations of, for example, categories of foaming agents, applications, and heat insulation properties as defined in standards such as JIS A 9526:2015 "spray-applied rigid urethane foam for building insulation". In the method for producing a polyurethane foam according to the present invention, any type of the polyurethane foam stock solution can be used.

In JIS A 9526:2015, types of spray-applied rigid polyurethane foam stock solutions are classified into, for example, type A-1, type A-1H, type A-2, type A-2H, type A-3, and type B according to combinations of specific categories of the following foaming agents, applications, and heat insulation properties.
a) Categories of foaming agents
   Type A: containing no fluorocarbons
   Type B: containing fluorocarbons
b) Categories of applications
   1: not resistant to load, and suitable for use in a wall and back of a roof
   2: resistant to load, and suitable for use in a cold store
   3: low density and not resistant to load, and for use in an infilling heat insulation method for a wall or the like
c) Categories of heat insulation properties
   H: having a high heat insulation property
   Blank: having a usual heat insulation property

Each of the components which can constitute a polyurethane foam stock solution is described below in detail, but the present invention is not limited thereto.

The polyisocyanate component used for the polyurethane foam stock solution contains a compound having a plurality of isocyanate groups (polyisocyanate). Examples of the polyisocyanate include an aliphatic, alicyclic, aromatic, or aromatic-aliphatic polyisocyanate, and also include a modified form of the foregoing polyisocyanates. Examples of the modified form of the polyisocyanate include a polyisocyanate having a structure such as uretdione, isocyanurate, urethane, urea, allophanate, biuret, carbodiimide, iminooxadiazinedione, oxadiazinetrione, or oxazolidone. As a polyisocyanate, an isocyanate group-containing prepolymer obtainable by reacting a polyol with a polyisocyanate can be used.

Among polyisocyanates, examples of the aromatic polyisocyanate include phenylene diisocyanate, tolylene diisocyanate, xylylene diisocyanate, diphenylmethane diisocyanate, dimethyldiphenylmethane diisocyanate, triphenylmethanetriisocyanate, naphthalene diisocyanate, and polymethylenepolyphenylpolyisocyanate. Examples of the alicyclic polyisocyanate include cyclohexylene diisocyanate, methylcyclohexylene diisocyanate, isophorone diisocyanate, dicyclohexylmethane diisocyanate, and dimethyldicyclohexylmethane diisocyanate. Examples of the aliphatic polyisocyanate include methylene diisocyanate, ethylene diisocyanate, propylene diisocyanate, tetramethylene diisocyanate, and hexamethylene diisocyanate.

The polyisocyanates may be used alone or in combination of two or more. In a polyurethane foam stock solution, the content of a polyisocyanate can be represented by, for example, an isocyanate index, and the content is suitably selected according to the type of a polyurethane foam stock solution. For example, in type A-1H, the isocyanate index is generally adjusted so as to be 100 to 500, and the isocyanate index in type A-3 is generally 20 to 80. As used herein, the isocyanate index refers to a value obtained by multiplying the ratio of isocyanate groups of a polyisocyanate relative to the total number of active hydrogens, which react with the isocyanate groups, in a polyol component, a foaming agent, or the like by 100.

The polyol used for the polyurethane foam stock solution is a compound having a plurality of hydroxyl groups (polyol), and normally refers to a polymeric polyol. Specific examples include a polyether polyol, a polyester polyol, a polycarbonate polyol, a polyester ether polyol, a polyesterpolycarbonate polyol, a polylactone polyol, a polybutadiene polyol, a polymer polyol, and a silicone polyol. The polyols may be used alone or in combination of two or more. In the polyurethane foam stock solution, the content of a polyol is suitably adjusted according to the amount of a polyisocyanate and desired performance, and examples of the content include 15 to 50% by mass.

The foaming agents which can be used for the polyurethane foam stock solution are generally classified into physical foaming agents and chemical foaming agents. Specific examples of the physical foaming agent include fluorocarbons such as hydrochlorofluorocarbon (HCFC) and hydrofluorocarbon (HFC); hydrofluoroolefin (HFO); hydrochlorofluoroolefin (HCFO); hydrocarbons such as heptane, hexane, and pentane; and carbon dioxide. Examples of the chemical foaming agent include water; and carboxylic acids such as formic acid and acetic acid. The foaming agents may be used alone or in combination of two or more. The physical foaming agent may be used in combination with the chemical foaming agent. In the polyurethane foam stock solution, the content of the foaming agent is, for example, 1 to 20% by mass.

Examples of a catalyst which can be used for the polyurethane foam stock solution include a catalyst which accelerates a reaction between water and an isocyanate (a foaming catalyst), a catalyst which accelerates a reaction between a polyol and an isocyanate (a resinification catalyst), and a catalyst which accelerates a trimerization reaction of isocyanates (i.e., formation of an isocyanurate ring) (a trimerization catalyst).

Examples of the foaming catalyst include dimorpholine-2,2-diethyl ether, N,N,N',N",N"-pentamethyldiethylenetriamine, bis(dimethylaminoethyl) ether, and 2-(2-dimethylaminoethoxy)ethanol.

Examples of the resinification catalyst include amine catalysts such as triethylenediamine, N,N-dimethylcyclohexylamine, N,N,N',N'-tetramethylethylenediamine, N,N,N',N",N"',N"'-hexamethyltriethylenetetramine, N-dimethylaminoethyl-N'-methylpiperazine, N,N,N',N'-tetramethylhexamethylenediamine, 1,2-dimethylimidazole, N,N-dimethylaminopropylamine, and bis(dimethylaminopropyl)amine; alkanolamine catalysts such as N,N-dimethylaminoethanol, N,N,N'-trimethylaminoethylethanolamine, N,N,N'-trimethyl-N'-hydroxyethylbis(aminoethyl) ether, N-(2-(dimethylamino)ethoxy)ethyl)-N-methyl-1,3-propandiol, N-(3-dimethylaminopropyl)-N,N-diisopropanolamine, N-(2-hydroxyethyl)-N'-methylpiperazine, N,N-dimethylaminohexanol, and 5-dimethylamino-3-methyl-1-pentanol; and metal catalysts such as tin(II) octylate, dibutyltin(IV) dilaurate, lead octylate, bismuth carboxylate, and a zirconium complex.

Examples of the trimerization catalyst include aromatic compounds such as 2,4,6-tris(dialkylaminoalkyl)hexahydro-S-triazine, 1,3,5-tris(N,N-dimethylaminopropyl)hexahydro-S-triazine, 2,4,6-tris(dimethylaminomethyl)phenol, 2,4-bis(dimethylaminomethyl)phenol, and 1-isobutyl-2-methylimidazole; alkali metal carboxylates such as potassium acetate, potassium 2-ethylhexanoate, and potassium octylate; and a quaternary ammonium salt of a carboxylic acid; or other onium salts.

The catalysts may be used alone or in combination of two or more. In the polyurethane foam stock solution, the content of the catalyst is suitably adjusted according to reactivity of the polyurethane foam stock solution, and examples of the content include 0.5 to 8% by mass.

As a foam stabilizer which can be used for the polyurethane foam stock solution, a surfactant is preferably used. Examples of the surfactant include ionic surfactants such as anionic, cationic, and amphoteric surfactants, and nonionic surfactants, and nonionic surfactants are preferred. Specific examples preferably include a silicone-based surfactant. The foam stabilizers may be used alone or in combination of two or more. In the polyurethane foam stock solution, the content of the foam stabilizer is, for example, 0.1 to 5% by mass.

The polyurethane foam stock solution may contain a flame retardant. As a flame retardant, a phosphorus flame retardant is preferably used. Specific examples preferably include tricresyl phosphate (TCP), triethyl phosphate (TEP), tris(β-chloroethyl)phosphate (TCEP), and tris(β-chloropropyl)phosphate(TCPP). A solid (powder) flame retardant such as ammonium polyphosphate or red phosphorus may be used, if necessary. The flame retardants may be used alone or in combination of two or more. In the polyurethane foam stock solution, the content of the flame retardant is, for example, 3 to 15% by mass.

In the polyurethane foam stock solution, other components such as a colorant, a filler, an antioxidant, an ultraviolet absorber, a heat stabilizer, a light stabilizer, a plasticizer, a fungicide, an antimicrobial agent, an industrial cashew nutshell liquid, a cross-linking agent, a solvent, a viscosity-reducing agent, a pressure-reducing agent, and a separation inhibitor may be suitably compounded, if necessary.

The polyurethane foam stock solution is sprayed on a target object after a polyisocyanate component and a polyol component are mixed to afford the polyurethane foam stock solution. Typical methods for mixing these two liquids are generally a dynamic mixing method, a static mixing method, and a collisional mixing method, and a collisional mixing method is preferred. The polyurethane foam stock solution is preferably collisionally mixed in a mixing chamber of a spray gun.

In the method for producing a polyurethane foam according to the present invention, it is desirable that reactivity of the polyurethane foam stock solution is controlled so as to prevent dripping. For example, as indices to reactivity of the polyurethane foam stock solution, cream time, rise time, and the like are known. Since suitable cream time and rise time vary depending on types of the polyurethane foam stock solution, it is difficult to define generally. With respect to a type of spray-applied rigid polyurethane foam stock solutions as defined in JIS A 9526:2015, it is preferred that the stock solution is prepared so that the cream time falls within a range of 0 to 2 seconds, and the rise time falls within a range of 4 to 12 seconds.

The cream time refers to the length of time between mixing of a polyisocyanate component and a polyol component and beginning of foaming of the polyurethane foam stock solution. As used herein, the cream time refers to the length of time between mixing of a polyisocyanate component and a polyol component and beginning of a rise in the surface level of the stock solution.

The rise time refers to the length of time between mixing of a polyisocyanate component and a polyol component and the end of foaming of the polyurethane foam stock solution. As used herein, the rise time refers to the length of time between mixing of a polyisocyanate component and a polyol component and the time at which the height of the rising foam has reached a maximum.

In the method for producing a polyurethane foam according to the present invention, a known foaming machine used for a spray method (a spray foaming machine) can be used. However, since it is required that compressed gas is heated and kept at a temperature of not less than 40°C, a spray foaming machine used in the present invention further comprises a compressed gas-heating means. A spray foaming machine used in the present invention generally comprises a spray gun for spraying a polyurethane foam stock solution in a mist form by using compressed gas, a first container for accommodating a polyisocyanate component, a second container for accommodating a polyol component, a compressor for compressing a gas such as air, a first stock solution supply line which connects the first container with the spray gun and supplies the polyisocyanate component from the first container to the spray gun, a second stock solution supply line which connects the second container with the spray gun and supplies the polyol component from the second container to the spray gun, a compressed gas supply line which connects the compressor with the spray gun and supplies the compressed gas from the compressor to the spray gun, and a two-liquid supply pump which is disposed at a midpoint of the first stock solution supply line and a midpoint of the second stock solution supply line. The polyol component and the polyisocyanate component are supplied from the first container and the second container to the spray gun through the first stock solution supply line and the second stock solution supply line by the operation of the two-liquid supply pump. The spray foaming machine used in the present invention is preferably equipped with a compressed gas-heating means in at least one of the compressor, the compressed gas supply line, and the spray gun for the purpose of heating the compressed gas. Specifically, it is preferred that a heating apparatus is disposed at a midpoint of the compressed gas supply line, a heating hose is used as the compressed gas supply line, or these heating means are used in combination.

In a spraying step of the method for producing a polyurethane foam according to the present invention, a distance from a discharge port of a foaming machine (a nozzle tip of a spray gun) to a target object for spraying is preferably 20 to 100 cm. Spraying of a polyurethane foam stock solution performed at the above-described distance is preferred from the standpoint of forming a good spray pattern. In addition, at this distance, the extent of decrease in temperature of a stock solution ejected from a foaming machine until the stock solution arrives at a target object for spraying can be reduced sufficiently.

In a polyurethane foam obtained by the production method according to the present invention, a preferred average cell diameter varies depending on types of the polyurethane foam stock solution. With respect to type A-1H, the average cell diameter is preferably 100 to 250 µm. The average cell diameter in type A-3 is preferably 150 to 350 µm. Herein, the average cell diameter is obtained from a microscopic image of the surface of the foam. Specifically, the average cell diameter is calculated as follows: obtaining a microscopic image of the surface of foam by using a microscope, drawing a straight line on the obtained image, counting the number of cells with which the line overlaps, and calculating according to the following formula: Length of line/Number of cells = Average cell diameter.

In a polyurethane foam obtained by the production method according to the present invention, a preferred core density varies depending on types of the polyurethane foam stock solution. With respect to type A-1H, the core density is preferably 25 to 40 kg/m³. The core density in type A-2H is preferably 30 to 50 kg/m³, and the core density in type A-3 is preferably 7 to 25 kg/m³. Herein, the core density of a polyurethane foam is measured as follows. In type A-1H, the core density was measured as follows: performing spraying according to a method of "spraying-4" in Example below with reference to a method for preparing a sample as defined in JIS A 9526:2015, performing sampling, and measuring core density in double-layer spraying. In type A-3, in order to more clearly reveal influence on thermal conductivity (difference), the core density was measured as follows: performing spraying according to a method of "spraying-3" in Example below, performing sampling, and measuring core density in single-layer spraying.

In a polyurethane foam obtained by the production method according to the present invention, thermal conductivity is, as defined in JIS A 9526:2015, preferably not more than 0.034 W/m·K in type A-1 and type A-2, preferably not more than 0.026 W/m·K in type A-1H, type A-2H, and type B, and preferably not more than 0.040 W/m·K in type A-3. It is desirable that the polyurethane foam has lower thermal conductivity, and is insusceptible to conditions for application (ambient temperature) or the like and stable. Herein, the thermal conductivity of a polyurethane foam is measured as follows. In type A-1H, the thermal conductivity was measured as follows: performing spraying according to a method of "spraying-4" in Example below with reference to a method for preparing a sample as defined in JIS A 9526:2015, performing sampling, and measuring thermal conductivity in double-layer spraying. In type A-3, in order to more clearly reveal influence on thermal conductivity (difference), the thermal conductivity was measured as follows: performing spraying according to a method of "spraying-3" in Example below, performing sampling, and measuring thermal conductivity in single-layer spraying.

In a polyurethane foam obtained by the production method according to the present invention, adhesion strength is, as defined in JIS A 9526:2015, preferably not less than 80 kPa in type A-1 and type A-1H, and preferably not less than 100 kPa in type A-2, type A-2H, and type B. Herein, the adhesion strength of a polyurethane foam was measured according to a method described in "spraying-5" in Example below.

Polyurethane foam obtained by the production method according to the present invention can be used in various applications such as ships, vehicles, plants, heat-insulated apparatuses, constructions, engineering, furniture, and interiors. Furthermore, according to the method for producing a polyurethane foam according to the present invention, since a desired polyurethane foam can be consistently produced even when the spray method is performed under a low-temperature environment, the polyurethane foam can be preferably used for a heat insulation member of a building such as a residence, an office building, or a cold store.

In the method for producing a polyurethane foam according to the present invention, a target object on which a polyurethane foam stock solution is sprayed is not particularly limited, and preferred examples of the target object include a wall, under a floor, a ceiling, and under a roof of a building since the polyurethane foam obtained by the production method can be preferably used for a heat insulation member of a building such as a residence or an office building as described above.

### Examples

The present invention is further described below in detail with reference to Examples, but the present invention is not limited to Examples described below in any way.

### Experiment-1 (Preliminary Experiment)

### <Description>

Temperature of a stock solution was measured when the stock solution ejected from a spray foaming machine arrived at a target structure (wall). As the stock solution, SCU POLYOL Y458 manufactured by Sumika Covestro Urethane Co., Ltd. as a polyol component was used together with, instead of a polyisocyanate component, Mesamoll manufactured by LANXESS which is not capable of reacting with polyols to eliminate influence of heat of reaction, and the measurement was performed. In order to check whether spray pattern is good (Good) or not (No Good), the temperature of a stock solution when the stock solution was supplied to a spray gun (the initial temperature of the stock solution) was set to 50°C or 55°C. In order to check the effect of turning-on or turning-off of the power of a heater, the room temperature was set to 0°C or 30°C.

### <Apparatuses>

Spray foaming machine: Reactor E-20/Fusion gun (Chamber: 4242) manufactured by Graco Inc., Length of hose: 20 m
Air heater: A custom-made mini shell-type heater (500 W) manufactured by NIPPON HEATER Co., Ltd.

For heating compressed air to be supplied from a compressor to a spray gun, an air heater was mounted on the inlet of the Reactor E-20. The temperature was controlled by using a thermocouple installed in an air hose before the spray gun.

### <Method for measurement>

A stock solution was sprayed from a spray gun toward a wall which was 50 cm apart from the tip of the spray gun. The wall was covered with a polyethylene (PE) sheet and a thermocouple was mounted on the sheet. The stock solution was ejected horizontally toward the thermocouple. The ejection was continued until the temperature of the stock solution when the stock solution arrived at the wall became stable. The stable temperature of the stock solution was recorded as a temperature of the stock solution when the stock solution arrived at the wall, and the size of a spray pattern (diameter) was observed at the same time. The results are shown in Table 1.

**[Table 1]**

| | Room temperature [°C] | Air heater | Temperature of compressed air (in a hose) [°C] | Initial temperature of stock solution (in a hose) [°C] | Temperature of stock solution when arriving at wall [°C] | Evaluation of spray pattern | |
|---|---|---|---|---|---|---|---|
| | | | | | | Diameter [cm] | Evaluation |
| Condition-1 | 0 | ON | 60 | 50 | ○ 41 | 20 to 25 | ○ Good |
| Condition-2 | 0 | OFF | 20 | 50 | × 30 | 20 to 25 | ○ Good |
| Condition-3 | 0 | OFF | 20 | 55 | × 28 | 27 to 32 | × Too broad |
| Condition-4 | 30 | OFF | 20 | 50 | ○ 38 | 20 to 25 | ○ Good |
| Condition-5 | 30 | OFF | 20 | 55 | ○ 36 | 27 to 32 | × Too broad |

### <Results>

According to the results under Condition-1 to Condition-3 as shown in Table 1, it is to be understood that even in a room at a temperature of 0°C, when an air heater was operated to heat and keep compressed air at 60°C, the extent of decrease in temperature of a stock solution when the stock solution arrived at the wall was reduced. For example, the temperature of a stock solution when the stock solution arrived at the wall was higher than the temperatures under Condition-4 and Condition-5.

According to the results under Condition-3 and Condition-5, it is to be understood that with respect to the stock solution used, when the initial temperature of the stock solution was raised to 55°C, spray pattern became too broad, resulting in difficulty of foam application. Further, since the particle size of mist blown out from a spray foaming machine became smaller, the temperature of the stock solution when the stock solution arrived at a wall became lower, instead of becoming higher, than the temperature of the stock solution when the initial temperature of the stock solution was 50°C.

### Experiment-2 (Actual Experiment)

### <Description>

Since the results in Experiment-1 (Preliminary Experiment) show that good spray patterns were achieved under Condition-1, Condition-2, and Condition-4 in which the initial temperature of the stock solutions was 50°C, Condition-1, Condition-2, and Condition-4 were used for evaluating spraying of type A-1H and type A-3 polyurethane foam stock solutions.

### <Polyurethane foam stock solution>

(Type: type A-3)
Polyisocyanate component: Sumidur 44V20 L manufactured by Sumika Covestro Urethane Co., Ltd.
Polyol component: SCU POLYOL Y458 manufactured by Sumika Covestro Urethane Co., Ltd.

Viscosity of the polyisocyanate component at 20°C was 280 mPa·s, and viscosity of the polyol component at 20°C was 430 mPa·s.
(Type: type A-1H)
Polyisocyanate component: Sumidur 44V20 L manufactured by Sumika Covestro Urethane Co., Ltd.
Polyol component: CS-703PET19-JPCSP031 manufactured by Sumika Covestro Urethane Co., Ltd.

Viscosity of the polyisocyanate component at 20°C was 280 mPa·s, and viscosity of the polyol component at 20°C was 250 mPa·s.

### <Apparatuses>

The same apparatuses as used in Experiment-1 (Preliminary Experiment) were used.

### <Items and methods for physical property measurements>

### Spraying-1: Measurement of dripping

A plywood board covered with craft paper was mounted on a wall, a stock solution was sprayed horizontally (with a fixed gun) from a distance of about 50 cm for 1 second, and whether the stock solution which arrived at the plywood board dripped or not was observed. The results are shown in Table 2.

### Spraying-2: Measurement of reactivity

A 2L-plastic cup was placed on the floor, a stock solution was sprayed into the cup in a vertical downward direction (with a fixed gun) from a height of 40 cm for 0.5 to 1 second, and cream time and rise time were measured. The results are shown in Table 2.

### Spraying-3: Measurement of foam core density, thermal conductivity, and cell diameter of type A-3

A plywood board covered with polyethylene film (900 h × 450 w mm) was mounted on a wall, and a stock solution was continuously sprayed to a thickness of 65 to 70 mm (so as to avoid layering) from a distance of about 50 cm while traversing laterally. On the day after the spraying, a sample having dimensions of 200 × 200 × 25 mm was cut out from the center of the foam, and core density and thermal conductivity were measured [using Auto A HC-074(200) manufactured by EKO Instruments B.V., High temperature: 35.5°C/Low temperature 10.5°C]. An image of the surface of the sample was obtained using a macro scope, and an average cell diameter was obtained from the image. The results are shown in Table 2.

### Spraying-4: Measurement of foam core density, thermal conductivity, and cell diameter of type A-1H

A plywood board covered with polyethylene film (900 h × 450 w mm) was mounted on a wall, and undercoating was applied by spraying to a thickness of about 1 mm from a distance of about 50 cm while traversing laterally. After the undercoating was cured (for 30 seconds), the first layer was formed by continuously spraying to a thickness of about 30 mm, and after another 30 seconds, the second layer was formed by continuously spraying to a thickness of about 30 mm. On the day after the spraying, a sample having dimensions of 200 × 200 × 25 mm was cut out from the center of the foam so that the sample contains a boundary (interlayer) between the first layer and the second layer. As in Spraying-3, core density, thermal conductivity, and cell diameter were measured. The results are shown in Table 2.

### Spraying-5: Measurement of adhesive strength

A slate plate (300 × 300 mm) was placed on a floor, a stock solution was sprayed from a distance of about 50 cm while traversing laterally to form undercoating and two layers each having a thickness of 30 mm. After the layers were cured, the surface of the foam was scraped off flat, an adhesion jig (10 × 10 cm) was adhered by an adhesive. One hour after the spraying, strength of adhesion between the foam and the slate plate was measured by an adhesive strength tester conforming to the manner of the Building Research Institute of the Ministry of Construction. The results are shown in Table 2.

**[Table 2]**

| | | | Example-1 | Comparative Example-1 | Reference Example-1 | Example-2 | Comparative Example-2 | Reference Example-2 |
|---|---|---|---|---|---|---|---|---|
| Type of stock solution | | | Type A-3 | | | Type A-1H | | |
| | Polyisocyanate component | | Sumidur 44V20L | | | Sumidur 44V20L | | |
| | Polyol component | | SCU POLYOL Y458 | | | CS-703PET 19-JPCSP031 | | |
| Conditions for spraying | | | | | | | | |
| Room temperature [°C] | | | 0 | 0 | 30 | 0 | 0 | 30 |
| Air heater | | | ON | OFF | OFF | ON | OFF | OFF |
| Temperature of compressed air (in a hose) [°C] | | | 60 | 20 | 20 | 60 | 20 | 20 |
| Initial temperature of stock solution (in a hose) [°C] | | | 50 | 50 | 50 | 45 | 45 | 45 |
| Volume ratio for mixing two liquids [A: B]^{*1} | | | 1:1 | 1:1 | 1:1 | 1:1 | 1:1 | 1.1 |
| Stock solution discharge pressure [MPa] | | | 6 | 6 | 6 | 6 | 6 | 6 |
| Stock solution discharge rate [g/min] | | | 4000 | 4000 | 4000 | 4000 | 4000 | 4000 |
| Pressure of compressed air [MPa] | | | 0.6 | 0.6 | 0.6 | 0.6 | 0.6 | 0.6 |
| (Preliminary Experiment) | Spray pattern | | Good | Good | Good | Good | Good | Good |
| Spraying-1 | Dripping | | Not observed | Observed | Not observed | Not observed | Observed | Not observed |
| Spraying-2 | Reactivity [second] | Cream time | 1.3 | 1.6 | 1.2 | 1.0 | 1.2 | 0.9 |
| | | Rise time | 8.2 | 7.6 | 6.6 | 6.1 | 7.0 | 4.9 |
| Spraying-3 | Average cell diameter [µm] | | 250 to 300 | 300 to 400 | 200 to 350 | | | |
| | Foam core density [kg/m3] | | 13.6 | 12.8 | 12.5 | | | |
| | Thermal conductivity [W/m·K] | | 0.037 | 0.038 | 0.037 | | | |
| Spraying-4 | Average cell diameter [µm] | | | | | 100 to 200 | 100 to 200 | 100 to 200 |
| | Foam core density [kg/m3] | | | | | 31.6 | 33.1 | 33.4 |
| | Thermal conductivity [W/m·K] | | | | | 0.020 | 0.020 | 0.020 |
| Spraying-5 | Adhesive strength [kPa] | | | | | 111 | 69 | 157 |

| | | | | | | | | |
|---|---|---|---|---|---|---|---|---|
| *1 The volume ratio for mixing two liquids [A : B] refers to a volume ratio between a polyisocyanate component (A) and a polyol component (B) [A: B]. | | | | | | | | |

### <Results>

### (Type: type A-3)

When spraying was performed under conditions according to Condition-4 in Experiment-1, the amount of a catalyst was adjusted so that cream time (reactivity) became about 1.2 ± 0.1 seconds to prepare a polyurethane foam stock solution. In Reference Example 1, there was no dripping of a stock solution when the stock solution was sprayed on a wall, and a desired polyurethane foam was produced. However, in Comparative Example 1, spraying was performed under conditions according to Condition-2 in Experiment-1, and cream time was extended to 1.6 seconds, resulting in dripping. Accordingly, it is understood that thermal conductivity was lower in Comparative Example 1. On the other hand, in Example 1, spraying was performed under conditions according to Condition-1 in Experiment-1. Since compressed air was heated, whereas the room temperature was 0°C, cream time was still 1.3 seconds, resulting in no dripping. In Example 1, a desired polyurethane foam was produced as in Reference Example 1.

### (Type: type A-1H)

When spraying was performed under conditions according to Condition-4 in Experiment-1, the amount of a catalyst was adjusted so that cream time (reactivity) became about 0.9 ± 0.1 seconds to prepare a polyurethane foam stock solution. In Reference Example 2, there was no dripping of a stock solution when the stock solution was sprayed on a wall, and a desired polyurethane foam was produced. However, in Comparative Example 2, spraying was performed under conditions according to Condition-2 in Experiment-1, and cream time was extended to 1.2 seconds, resulting in dripping. Further, in Comparative Example 2, it is understood that although there was no difference in thermal conductivity, adhesive strength was significantly lower than that in Reference Example 2. On the other hand, in Example 2, spraying was performed under conditions according to Condition-1 in Experiment-1. Since compressed air was heated, whereas the room temperature was 0°C, cream time was still 1.0 seconds which was the same as that in Reference Example 2, resulting in no dripping. Further, in Example 2, adhesive strength was higher than that in Comparative Example 2. The reason why the adhesive strength in Example-2 was lower than that in Reference Example-2 can be thought as follows: by difference in room temperature, the temperature of the target structure in Example-2 was lower than the temperature of the target structure in Reference Example-2. Since the adhesion is an adhesion between urethane foam and a target structure, the adhesion is affected by the temperature of the target structure.

## Claims

1. A method for producing a polyurethane foam, wherein the method comprises a step of spraying a polyurethane foam stock solution comprising a polyisocyanate component and a polyol component in a mist form by using compressed gas, wherein the compressed gas in the step is heated and kept at a temperature of not less than 40°C.

2. The method for producing a polyurethane foam according to claim 1, wherein an ambient temperature at which the step is performed is not more than 15°C.

3. The method for producing a polyurethane foam according to claim 1 or 2, wherein the temperature of the polyurethane foam stock solution is 30 to 60°C.
